# EUROPEAN PATENT SPECIFICATION

(11) **EP 3 928 930 B1**
(45) Date of publication and mention of the grant of the patent: **24.04.2024**
(21) Application number: 20774512.6
(22) Date of filing: 13.02.2020
(51) Int. Cl.: B25J 15/00, B23D 45/20, B23D 45/10, B25B 5/06, B25B 5/14, B23D 47/04, B23D 45/12

(54) **CLAMP AND SAW CUTTING DEVICE**
KLEMME UND SÄGESCHNEIDVORRICHTUNG
PINCE ET DISPOSITIF DE COUPE À LA SCIE

(30) Priority: 15.03.2019 CN 201910199044
(43) Date of publication of application: 29.12.2021
(73) Proprietor: Dalian Field Manufacturing Co., Ltd, Dalian, Liaoning 116200 (CN)
(72) Inventor: GAO, Guowu, Dalian, Liaoning 116200 (CN)
(74) Representative: Angerhausen, Christoph
(86) International application number: PCT/CN2020/074989
(87) International publication number: WO 2020/186940

(56) References cited:
- CN-A- 105 458 301
- CN-A- 105 478 893
- CN-A- 106 392 650
- CN-A- 108 312 142
- CN-A- 108 312 142
- CN-A- 108 582 131
- CN-A- 108 582 131
- CN-A- 109 926 653
- CN-U- 205 309 443
- CN-U- 206 123 693
- CN-U- 206 839 674
- CN-U- 207 189 651
- CN-U- 207 669 322
- CN-U- 207 757 643
- CN-U- 207 953 878
- DE-A1- 3 718 886
- DE-A1- 19 903 660
- DE-A1-102007 019 269
- DE-B- 1 132 409
- JP-A- 2006 263 882
- JP-B1- S5 034 827
- US-A1- 2010 187 740
- US-B1- 9 352 471

## Description

### FIELD

The disclosure relates to a technical field of pipe sawing, and in particular relates to a clamp and a sawing device.

### BACKGROUND

In order to improve production efficiency, existing sawing systems no longer adopts a single mode of cutting operation of single saw blade, but adopts a high-efficiency production mode of alternate cutting operation of multiple saw blades.

In a sawing system including dual sawing machines, the mode is that one sawing machine moves at a same speed with a pipe and cuts the pipe, while the other sawing machine returns to a starting point and waits, and the two sawing machines alternately perform cutting operations. However, the pipe is unstable and trends to shake during the cutting process, which affects the cutting quality. Therefore, it is necessary to equip the sawing machine with a clamp for maintaining the stability of the cutting process; however, existing clamps used in the sawing system usually have one fixed clamping arm and one rotating clamping arm, and its clamping opening is small; during the alternate cutting process, the two clamps are prone to collision at the meeting position, and the clamps will be damaged to cause system failures.

Therefore, there is an urgent need for a clamp that can avoid collisions at the meeting position. A clamp with the features of the preamble of claim 1 is disclosed by the US 2010/187740 A1 and DE 199 03 660 A1. Other clamps are described in the DE 11 32 409 B, DE 3718886 A1, CN 205309443 U and CN 105478893 A.

### SUMMARY

### Technical Problem

Embodiments of the disclosure provide a clamp and a sawing device, which can increase an opening angle of the clamp, thereby avoiding collision of the clamp at a meeting position.

### Solution to Problem

In an aspect, the disclosure provides a clamp including: a base; a clamp body connected to the base, wherein the clamp body includes a first half clamp body and a second half clamp body, each of the first half clamp body and the second half clamp body is rotatably connected to the base, and the first half clamp body and the second half clamp body are adapted to cooperate with each other to clamp an object; and
a driving assembly connected to the first half clamp body and the second half clamp body through a connector, wherein the driving assembly is adapted to drive the first half clamp body and the second half clamp body through the connector to rotate and approach or separate from each other.

The connector includes a first connecting rod and a second connecting rod, one end of the first connecting rod is rotatably connected to the first half clamp body, and one end of the second connecting rod is rotatably connected to the second half clamp body; and the driving assembly includes a driving unit and a pushing unit, the other end of the first connecting rod and the other end of the second connecting rod are both rotatably connected to the pushing unit, and the driving unit is adapted to drive the pushing unit to reciprocate in a direction perpendicular to an axial direction of the object, so that the first connecting rod and the second connecting rod drive the first half clamp body and the second half clamp body to rotate to approach or separate from each other.

According to an aspect of the disclosure not according to the appended claims, the pushing unit includes a pushing rod, and one end of the pushing rod is connected to the driving unit; and the first connecting rod and the second connecting rod are both rotatably connected to the other end of the pushing rod.

The pushing unit includes a pushing rod and a U-shaped frame, the U-shaped frame includes a bottom edge and two side edges connected to the bottom edge respectively, one end of the pushing rod is connected to the driving unit, and the other end of the pushing rod is connected to the bottom edge of the U-shaped frame; and the other end of the first connecting rod is rotatably connected to one of the side edges of the U-shaped frame, and the other end of the second connecting rod is rotatably connected to the other side edge of the U-shaped frame.

The first half clamp body and the second half clamp body are arranged symmetrically, and the pushing rod is arranged along a symmetry axis of the first half clamp body and the second half clamp body and is connected perpendicularly to a midpoint of the bottom side, and a distance between the two side edges is greater than a width of the first half clamp body and the second half clamp body in a closed state.

According to an aspect of the disclosure, the clamp further includes a sliding rail arranged on the base along a direction parallel to the symmetry axis, and a slider is arranged on the U-shaped frame, and the slider is disposed on the sliding rail and can slide along the sliding rail.

According to an aspect of the disclosure, the first half clamp body and the second half clamp body are both rotatably connected to the base through a pin; or the first half clamp body is rotatably connected to the base through a first pin, the second half clamp body is rotatably connected to the base through a second pin, and the first pin and the second pin are arranged symmetrically with respect to the symmetry axis of the first half clamp body and the second half clamp body.

According to an aspect of the disclosure, each of the first half clamp body and the second half clamp body includes a clamping arm and a clamping part having a clamping opening, the clamping part and the clamping arm are detachably connected, and the clamping part is adapted to clamp the object.

According to an aspect of the disclosure, the clamping arm includes a first connecting section and a second connecting section, and the first connecting section and the second connecting section are connected at a predetermined angle, the first connecting section is rotatably connected to the base, and the clamping part is disposed on the second connecting section.

According to an aspect of the disclosure, the driving assembly has a first driving speed and a second driving speed, the first driving speed is greater than the second driving speed, and the driving assembly is adapted to drive the first half clamp body and the second half clamp body at the first driving speed through the connector to approach each other from an opening state to a predetermined distance, and then drive the first half clamp body and the second half clamp body at the second driving speed through the connector to close.

In another aspect, embodiments of the disclosure provide a sawing device including: a clamp assembly including two or more clamps distributed independently of each other, wherein the two or more clamps can be distributed around a circumference of the object and be staggered with each other around the circumference, each of the clamps is adapted to clamp the object and reciprocate in a direction parallel to an axial direction of the object, and during reciprocations of the respective clamps, one of the clamps will clamp the object, and other clamp will be in an opening state at a meeting position so as to avoid the clamp that clamps the object, wherein each of the clamps is any of the above clamps; and a sawing assembly for cutting the object, wherein the sawing assembly includes two or more sawing machines distributed independently of each other, the sawing machine is used in conjunction with the clamp, and the clamp and the sawing machine that are used in conjunction with each other can move synchronously in the direction parallel to the axial direction.

According to an aspect of the disclosure, the sawing device further includes: a plurality of tracks that can be arranged along the direction parallel to the axial direction around a circumference of the object; and a plurality of mobile assemblies that can be disposed on different tracks and reciprocate along the tracks, wherein a number of the mobile assemblies matches with a number of the clamps, and the clamp and the sawing machine that are used in conjunction with each other are mounted on a same mobile assembly.

### Beneficial Effect

In the clamp according to embodiments of the disclosure, the first half clamp body and the second half clamp body are both rotatably connected to the base, and the driving assembly is connected to the first half clamp body and the second half clamp body through the connector, and drives the first half clamp body and the second half clamp body through the connector to rotate and approach or separate from each other; the two half clamp bodies simultaneously rotate to increase an opening angle of the clamp, which can allow the clamp body in a closed state to pass therethrough, and the clamp has a simple structure and is convenient for disassembly and maintenance.

### BRIEF DESCRIPTION OF THE DRAWINGS

In order to more clearly illustrate technical solutions according to embodiments of the disclosure, accompanying drawings that need to be used in the embodiments of the disclosure will be briefly introduced below; it is obvious that the accompanying drawings described below relate to only some embodiments of the disclosure, and those of ordinary skill in the art can obtain other accompanying drawings according to these drawings without creative work for those of ordinary skill in the art.
Fig. 1 is a schematic structural diagram of a first type of clamp not part of the claimed subject matter;
Fig. 2 is a schematic structural diagram of a second type of clamp according to an embodiment of the disclosure in an opening state;
Fig. 3 is a schematic structural diagram of a second type of clamp according to an embodiment of the disclosure in a closed state;
Fig. 4 is a schematic structural diagram of a third type of clamp not according to the claims;
Fig. 5 is a schematic structural diagram of a fourth type of clamp according to an embodiment of the disclosure;
Fig. 6 is a schematic structural diagram of a sawing device according to an embodiment of the disclosure;
Fig. 7 is a schematic structural diagram of two clamps at a meeting position according to an embodiment of the disclosure.

### DETAILED DESCRIPTION

Features and exemplary embodiments of various aspects of the disclosure will be described in detail below. In the following detailed description, many specific details are presented in order to provide a comprehensive understanding of the disclosure. However, it will be apparent to those skilled in the art that the disclosure can be implemented without some of these specific details. The following description of embodiments is intended only to provide a better understanding of the disclosure by showing examples of the disclosure. In the accompanying drawings and the following description, at least some of well-known structures and techniques are not shown in order to avoid unnecessarily obscuring the disclosure; and dimensions of some structures may have been exaggerated for the sake of clarity. In addition, features, structures, or characteristics described below may be combined in any suitable manner in one or more embodiments within the scope of the appended claims.

All orientation terms in the description below relate to directions shown in the drawings and are not intended to limit specific structures of embodiments of the disclosure. In the description of the disclosure, it should also be noted that, unless otherwise expressly specified and limited, terms "mount" and "connect" are to be understood in a broad sense, and may be, for example, a fixed connection, a disassemble connection, or an integral connection; may be direct connection or indirect connection through an intermediate medium. To a person of ordinary skill in the art, the specific meanings of the above terms in the disclosure may be understood according to actual circumstance.

It should to be noted that embodiments and features in the embodiments of the disclosure may be combined with each other, within the scope of the appended claims as long as there is no conflict. The embodiments will be described in detail below in conjunction with the accompanying drawings.

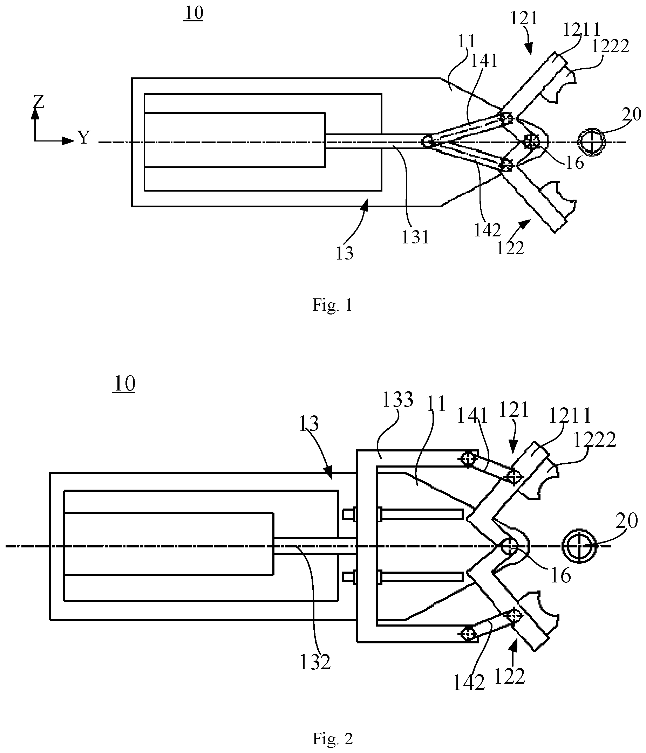

For a better understanding of the disclosure, the clamp and the sawing device according to the disclosure will be described in detail below with reference to Figs. 1 to 7.

Referring to Fig. 1, Fig. 1 is a schematic structural diagram of a first type of clamp not part of the claimed subject matter, and the clamp 10 includes a base 11, a clamp body and a drive unit. The clamp body is connected to the base 11, and the clamp body includes a first half clamp body 121 and a second half clamp body 122, and each of the first half clamp body 121 and the second half clamp body 122 is rotatably connected to the base 11, and the clamp body can clamp an object 20 through the rotating and cooperation of the first half clamp body 121 and the second half clamp body 122 at the base 11. It should be understood that the first half clamp body 121 and the second half clamp body 122 may be same or different, as long as they can rotate and cooperate to clamp the object 20; however, for the sake of convenient manufacturing and assembling, the first half clamp body 121 and the second half clamp body 122 may be same and symmetrically arranged. A driving assembly 13 is adapted to provide a driving force for the rotating of the clamping body, the driving assembly 13 is connected to the first half clamp body 121 and the second half clamp body 122 through a connector, and the driving assembly 13 drives the first half clamp body 121 and the second half clamp body 122 through a first connector to approach or separate from each other in a Z direction as shown in the drawings to clamp and release the object 20.

In embodiments of the disclosure, both the first half clamp body 121 and the second half clamp body 122 are rotatably connected to the base 11, the driving assembly 13 is connected to the first half clamp body 121 and the second half clamp body 122 through the connector and drives the first half clamp body 121 and the second half clamp body 122 through the connector to rotate at the base 11 to approach or separate from each other, and the two half clamp bodies rotate simultaneously, which can increase an opening angle of the clamp 10, the opening angle can allow a clamp body in a closed state to pass through, and the clamp 10 has a simple structure and can be easily assembled, disassembled and repaired.

The connector includes a first connecting rod 141 and a second connecting rod 142, wherein one end of the first connecting rod 141 is rotatably connected to the first half clamp body 121 and one end of the second connecting rod 142 is rotatably connected to the second half clamp body 122, the other ends of the first connecting rod 141 and the second connecting rod 142 are connected to the driving assembly 13, and the driving assembly 13 drives, through the first connecting rod 141 and the second connecting rod 142, the first half clamp body 121 and the second half clamp body 122 to approach or separate from each other. Specifically, the driving assembly 13 includes a driving unit and a pushing unit, and the driving unit is adapted to provide a driving force for the pushing unit, and the other ends of the first connecting rod 141 and the second connecting rod 142 are both rotatably connected to the pushing unit, so that the driving unit can drive the pushing unit to reciprocate along a direction perpendicular to an axial direction of the object 20, i.e., the driving unit can drive the pushing unit to reciprocate along a Y direction as shown in the drawings, which allows the first connecting rod 141 and the second connecting rod 142 to drive the first half clamp body 121 and the second half clamp body 122 to rotate at the base 11 to approach or separate from each other. It should be understood that the first half clamp body 121 and the second half clamp body 122 are usually same, and then the first connecting rod 141 and the second connecting rod 142 are also same. It is also possible to design the first connecting rod 141 and the second connecting rod 142 differently, depending on actual force requirements.

The driving assembly can be realized by a variety of ways; for example, it can be a motor, a chain gear, or other structures with drive functions such as air cylinders, electric cylinders, hydraulic cylinders cooperating with other structures, etc. In an example not according to the appended claims, referring to Fig. 1, the pushing unit includes a pushing rod 131, one end of the pushing rod 131 is connected to the driving unit so that the driving unit drives the pushing rod 131 to reciprocate in the Y direction. Both the first connecting rod 141 and the second connecting rod 142 are rotatably connected to the other end of the pushing rod 131. It will be understood that when the pushing rod 131 moves in a frontward direction, i.e., a forward direction of Y as shown, the first half clamp body 121 and the second half clamp body 122 approach each other and the clamp body is closed; and when the pushing rod 131 moves in a backward direction, i.e., an inverse direction of Y as shown, the first half clamp body 121 and the second half clamp body 122 separate from each other and the clamp body is opened. In this way, the single pushing rod is driven by the driving unit to move the first connecting rod 141 and the second connecting rod 142 so that the first half clamp body 121 and the second half clamp body 122 can approach or separate from each other, and such structure is simple. In particular, when the driving assembly 13 is at least one of an air cylinder, an electric cylinder and a hydraulic cylinder, the other ends of the first connecting rod 141 and the second connecting rod 142 can be connected to a piston rod, which is equivalent to the pushing rod 131 as described above.

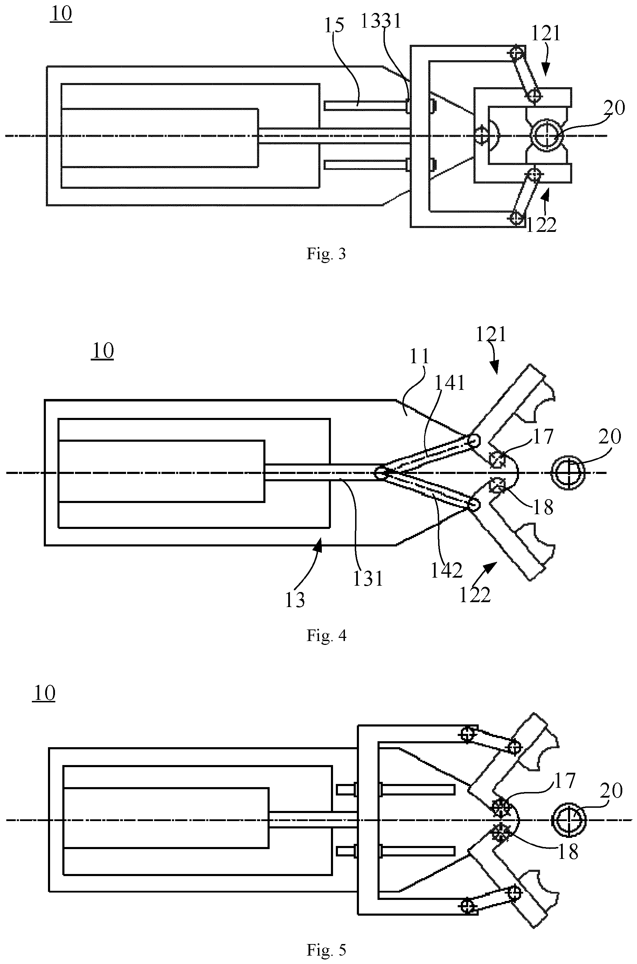

Referring to Fig. 2 and Fig. 3, Fig. 2 is a structural schematic diagram of a second type of clamp according to an embodiment of the disclosure in an opening state; and Fig. 3 is a structural schematic diagram of a second type of clamp according to an embodiment of the disclosure in a closed state. The pushing unit includes a pushing rod 132 and a U-shaped frame 133, and it can be understood that the U-shaped frame 133 includes a bottom edge and two side edges connected to the bottom plate, respectively. One end of the pushing rod 132 is connected to the driving unit and the other end is connected to the bottom edge of the U-shaped frame 133. The other end of the first connecting rod 141 and the other end of the second connecting rod 142 are rotatably connected to the two side edges of the U-shaped frame 133, respectively. By connecting the first connecting rod 141 and the second connecting rod 142 respectively to the two side edges of the U-shaped frame 133 to drive the two half clamp bodies to approach or separate from each other, it can save the pushing or pulling force. The first half clamp body 121 and the second half clamp body 122 are same and symmetrically arranged, and the pushing rod 132 is arranged along a symmetry axis of the two half clamp bodies, as shown in Fig. 2, arranged along a dashed line parallel to the Y-axis, and is perpendicular to the bottom edge of the U-shaped frame 133 and connected to a midpoint of the bottom edge, so that it is ensured that the two half clamp bodies are balanced in force and can approach or separate from each other simultaneously. Furthermore, a distance between the two side edges of the U-shaped frame 133 is greater than a width of the clamp 10 in the closed state, i.e., a width in the Z direction; as shown in Fig. 3, when the clamp 10 is closed, a part of the clamp 10 is located between the two side edges of the U-shaped frame 133, which can be more conducive to saving the pushing or pulling force.

In some optional embodiments, in order to reduce friction, the clamp 10 further includes a sliding rail 15, which is disposed on the base 11 in a direction parallel to the symmetry axis, and the U-shaped frame 133 is provided with a slider 1331, which is disposed on the sliding rail 15 and can drive the U-shaped frame 133 to slide along the sliding rail 15. The number of corresponding sliding rails 15 is not limited in the disclosure; the same number of sliding rails 15 can be disposed at both sides of the symmetry axis for the sake of balance of force; for example, at each side of the symmetry axis, there may be provided one sliding rail 15; and it should be understood that the number of the sliders 1331 matches with the number of sliding rails 15.

In some examples not according to the claims or optional embodiments, referring to Figs. 1-5, each of the first half clamp body 121 and the second half clamp body 122 includes a clamping arm 1211 and a clamping part 1222 having a clamping opening; and it should be understood that the first connecting rod 141 and the second connecting rod 142 are rotatably connected to the two clamping arms 1211 respectively, to drive the clamping parts 1222 to clamp or release the object 20. The clamping opening of the clamping part 1222 has a shape for matching with a shape of a clamped portion of the object 20; in order to clamp objects 20 with different types or shapes, the clamp 10 can be equipped with a plurality of clamping parts 1222 with their clamping openings having different shapes, and the clamping parts 1222 are removably connected to the clamping arms 1211 in order to adapt to different objects 20. Specific structures of the removable connection are not limited in the disclosure; for example, the clamping part 1222 can be connected to the clamping arm 1211 by a screw.

Further, the clamping arm 1211 includes a first connecting section and a second connecting section, the first connecting section and the second connecting section are connected at a predetermined angle, wherein the first connecting section is rotatably connected to the base 11 and the clamping part 1222 is connected to the second connecting section. The connection angle between the first connecting section and the second connecting section is not limited in the disclosure; for example, the connection angle between the first connection section and the second connection section can be in a range of 60° to 120°, preferably 90°, to facilitate the assembly of various structural parts of the clamp 10.

In order to save the driving force, when the structures as shown in Figs. 1 and 4 not according to the appended claims are adopted, i.e., when the pushing unit includes the pushing rod 131, as shown in Figs. 1 and 4, the first connecting rod 141 and the second connecting rod 142 are connected to the first connecting sections of the two clamping arms 1211 respectively, and preferably, the first connecting rod 141 and the second connecting rod 142 can be connected to respective corners at which the first connecting section is connected to the second connecting section, so that the first connecting rod 141 and the second connecting rod 142 can drive the two clamping arms 1211 to rotate. When the structures as shown in Figs. 2, 3 and 5 are adopted, i.e., when the pushing unit includes the pushing rod 132 and the U-shaped frame 133, and when a width between the two side edges of the U-shaped frame 133 is greater than a width of the two half clamp bodies in the closed state, the first connecting rod 141 and the second connecting rod 142 are connected to the second connecting sections of the clamping arms 1211 respectively, and preferably, the first connecting rod 141 and the second connecting rod 142 are connected to respective sides of the second connecting sections away from the base 11, which can improve the rotation efficiency.

In some examples not according to the claims or optional embodiments, as shown in Figs. 1, 2 and 3, the first half clamp body 121 and the second half clamp body 122 are rotatably connected to the base 11 through a pin 16, i.e., the first half clamp body 121 and the second half clamp body 122 have an identical axis of rotation. Such structure connects the first half clamp body 121 to the second half clamp body 122 by the unified pin, and is simple and can be easily assembled. In another optional embodiments, as shown in Figs. 4 and 5, the first half clamp body 121 is rotatably connected to the base 11 through a first pin 17, and the second half clamp body 122 is rotatably connected to the base 11 through a second pin 18; in order to maintain the balance of force, the first pin 17 and the second pin 18 are arranged symmetrically about the symmetry axis of the first half clamp body 121 and the second half clamp body 122. The first half clamp body 121 and the second half clamp body 122 are fixed with different pins, and when one of the half clamp bodies malfunctions, it facilitates disassembling and replacing only one half clamp body and saves the maintenance time.

In any of the above embodiments, the driving assembly 13 has a first driving speed and a second driving speed, wherein the first driving speed is greater than the second driving speed; when the clamp 10 changes from the opening state to the closed state, the driving assembly 13 first drives the first half clamp body 121 and the second half clamp body 122 at the first driving speed through the connector to approach each other to a predetermined distance, which is a set distance greater than a distance between the two half clamp bodies when the two half clamp bodies are completely closed, and then the driving assembly 13 drives the first half clamp body 121 and the second half clamp body 122 at the second driving speed through the connector to approach each other from the predetermined distance to the closed state. In these embodiments, the two half clamp bodies are quickly driven to approach each other at the first speed drive, which saves the operation time, and then the two half clamp bodies are driven at the second speed drive from the predetermined distance to firmly clamp the object 20; due to the lower second speed, it can prevent the object 20 from being impacted when the clamping opening is closed too quickly and thus prevent the object 20 from being damaged. It will be appreciated that when the clamp 10 changes from the closed state to the opening state, the clamp 10 may be driven only at the first driving speed to save time and improve efficiency. In an optional implementation, a two-stroke air cylinder may be adopted, i.e., the air cylinder may have two strokes, such as a large stroke corresponding to a first speed and a small stroke corresponding to a second speed. The two-stroke air cylinder may be implemented by two air cylinders mounted back-to-back, or one air cylinder formed into two segments with different telescopic speeds.

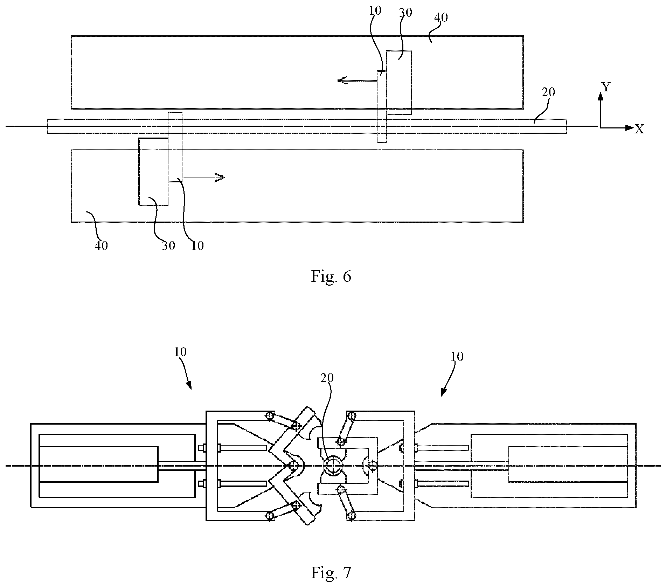

A second embodiment of the disclosure provides a sawing device, as shown in Figs. 6 and 7, the sawing device includes a clamp assembly and a sawing assembly, the clamp assembly is adapted to clamp an object 20 and the sawing assembly is adapted to cut the object 20. Specifically, the clamp assembly includes two or more clamps 10 distributed independently of each other, and these clamps 10 are the clamps 10 according to any of the above embodiments according to the apeended claims. The two or more clamps 10 are distributed around a circumference of the object 20 and staggered with each other around the circumference of the object 20; each clamp 10 can reciprocate along a direction parallel to an axial direction of the object 20; and during the reciprocations of the respective clamps 10, one of the clamps 10 clamps the object 20 and moves synchronously with the object 20, and other clamps 10 will be in the opening state when they meet the clamp 10 clamping the object 20, so as to avoid the clamp 10 clamping the object 20. The sawing assembly includes two or more sawing machines 30 distributed independently of each other; each sawing machine 30 is used in conjunction with a corresponding clamp 10, and the clamp 10 and the sawing machine 30 that are used in conjunction with each other can synchronously move along the direction parallel to the axial direction of the object 20 (X direction); when one of the clamps 10 clamps the object 20 and moves at a same speed with a feeding speed of the object 20, the sawing machine 30 used in conjunction with the clamp 10 clamping the object 20 can cut off the object 20. Fig. 6 shows only two groups of the clamp 10 and the sawing machine 30 that are used in conjunction with each other; three or more groups of the clamp 10 and the sawing machine 30 that are used in conjunction with each other may be similarly arranged and will not be shown here. It should be noted that when the clamp assembly includes two clamps 10, the two clamps 10 may be distributed at opposite sides around the circumference of the object 20 to achieve a better avoidance effect; when the clamp assembly includes three or more clamps 10, since the respective clamps 10 are staggered with each other around the circumference of the object 20, two clamps 10 at the staggered positions are at a certain angle during the reciprocations; for example, when there are three clamps 10, the three clamps 10 can be evenly distributed around the circumference of the object 20, and every two of the three clamps 10 are at an angle of 60 degree. Since the clamp 10 clamping the object 20 is not in the middle of the two half clamp bodies of another clamp 10 in the opening state, the number of the clamps 10 should not be too many in order to ensure the avoidance effect.

In this embodiment, the multiple clamps 10 and the multiple sawing machines 30 are distributed around the circumference of the object 20 and can reciprocate along the X direction; the clamp assembly in Fig. 6 and 7 including two clamps 10 is taken as an example for illustration, and the two clamps 10 are oppositely distributed around the circumference of the object 20; when the object 20 is fed by a predetermined length, one group of the clamp 10 (the clamp 10 in the first group) and the sawing machine 30 that are used in conjunction with each other start to accelerate from an original position; when the clamp 10 and the sawing machine 30 in the first group move at a same speed with a feeding speed of the object 20, the clamp 10 in the group clamps the object, and the sawing machine 30 in the group cuts off the object 20 in a direction perpendicular to the feeding direction (i.e., Y direction as shown in the drawings); after cutting off the object 20, the clamp 10 in the group releases the object 20 and decelerates to stop at a terminal position, and then returns to the original position; during this process, a second group of the clamp 10 and the sawing machine 30 that are used in conjunction with each other start to accelerate from the original position and repeat the above process; at a meeting position of the clamps 10 in the two groups, the clamp 10 in the second group is in a clamping state, the clamp 10 in the first group is in an opening state, and an opening of the clamp 10 in the first group in the opening state can allow the clamp 10 in the second group to pass therethrough to achieve the avoidance effect; and the specific avoiding process at the meeting position is shown in Fig. 7. When the clamp assembly includes three or more clamps 10, similar to the process described above, when the clamp 10 in the first group and the clamp 10 in the second group perform the above process, the clamp 10 and the sawing machine 30 that are used in conjunction with each other in other group(s) also perform the above process; at the meeting position of two clamps 10, it is always the case that one clamp 10 is in a clamping state and the other clamp 10 in an opening state so that the avoidance effect is achieved. It can be understood that the above processes are controlled by a control system, which can control the opening, closing and moving of the clamp 10 and the cutting and moving of the sawing machine 30 to ensure that each cut object 20 has a same length. With the above structures and working processes, the clamping and fixing of the clamp 10 during the sawing process improves the stability of sawing, and enables the avoidance of the clamps 10 to realize the continuous operation of multiple sawing machines 30 and improve the production efficiency.

In some optional embodiments, the sawing device also includes a plurality of tracks 40 and a plurality of mobile assemblies (not shown), these tracks 40 can be disposed along a direction parallel to the axial direction of the object 20 around the circumference of the object 20, the respective mobile assemblies can be disposed on different tracks 40 and can reciprocate along the tracks 40. The number of the mobile assemblies matches with the number of the clamps 10, the clamp 10 and the sawing machine 30 that are used in conjunction with each other are mounted on the same mobile assembly, so that the clamp 10 and the sawing machine 30 can synchronously move. Particularly, the mobile assembly may be a mobile cart.

The above description relates to only specific embodiments of the disclosure, but the scope of protection of the disclosure is not limited to this; any skilled person familiar with the art can readily obtain various equivalent modifications or replacements within the technical scope disclosed by the disclosure, and these modifications or replacements shall be covered within the scope of protection of the claims.

## Claims

1. A clamp (10), comprising:
a base (11);
a clamp body connected to the base (11), wherein the clamp body comprises a first half clamp body (121) and a second half clamp body (122), each of the first half clamp body (121) and the second half clamp body (122) is rotatably connected to the base (11), and the first half clamp body (121) and the second half clamp body (122) are adapted to cooperate with each other to clamp an object (20); and
a driving assembly (13) connected to the first half clamp body (121) and the second half clamp body (122) through a connector, wherein the driving assembly (13) is adapted to drive the first half clamp body (121) and the second half clamp body (122) through the connector to rotate and approach or separate from each other,
the connector comprises a first connecting rod (141) and a second connecting rod (142), one end of the first connecting rod (141) is rotatably connected to the first half clamp body (121), and one end of the second connecting rod (142) is rotatably connected to the second half clamp body (122);
the driving assembly (13) comprises a driving unit and a pushing unit, the other end of the first connecting rod (141) and the other end of the second connecting rod (142) are both rotatably connected to the pushing unit, and the driving unit is adapted to drive the pushing unit to reciprocate in a direction perpendicular to an axial direction of the object (20), so that the first connecting rod (141) and the second connecting rod (142) drive the first half clamp body (121) and the second half clamp body (122) to rotate to approach or separate from each other,
the pushing unit comprises a pushing rod (132) and a U-shaped frame (133), the U-shaped frame (133) comprises a bottom edge and two side edges connected to the bottom edge respectively, one end of the pushing rod (132) is connected to the driving unit, and the other end of the pushing rod (132) is connected to the bottom edge of the U-shaped frame (133); and
the other end of the first connecting rod (141) is rotatably connected to one of the side edges of the U-shaped frame (133), and the other end of the second connecting rod (142) is rotatably connected to the other side edge of the U-shaped frame (133),
**characterized in that** the first half clamp body (121) and the second half clamp body (122) are arranged symmetrically, and the pushing rod (132) is arranged along a symmetry axis of the first half clamp body (121) and the second half clamp body (122) and is connected perpendicularly to a midpoint of the bottom side, and a distance between the two side edges is greater than a width of the first half clamp body (121) and the second half clamp body (122) in a closed state.

2. The clamp (10) according to claim 1, **characterized in that** the clamp (10) further comprises a sliding rail (15) arranged on the base (11) along a direction parallel to the symmetry axis, and a slider (1331) is arranged on the U-shaped frame (133), and the slider (1331) is disposed on the sliding rail (15) and can slide along the sliding rail (15).

3. The clamp (10) according to any of claims 1 to 2, **characterized in that** the first half clamp body (121) and the second half clamp body (122) are both rotatably connected to the base (11) through a pin (16); or
the first half clamp body (121) is rotatably connected to the base (11) through a first pin (17), the second half clamp body (122) is rotatably connected to the base (11) through a second pin (18), and the first pin (17) and the second pin (18) are arranged symmetrically with respect to the symmetry axis of the first half clamp body (121) and the second half clamp body (122).

4. The clamp (10) according to any of claims 1 to 3, **characterized in that** each of the first half clamp body (121) and the second half clamp body (122) comprises a clamping arm (1211) and a clamping part (1222) having a clamping opening, the clamping part (1222) and the clamping arm (1211) are detachably connected, and the clamping part (1222) is adapted to clamp the object (20).

5. The clamp (10) according to claim 4, **characterized in that** the clamping arm (1211) comprises a first connecting section and a second connecting section, and the first connecting section and the second connecting section are connected at a predetermined angle, the first connecting section is rotatably connected to the base (11), and the clamping part (1222) is disposed on the second connecting section.

6. The clamp (10) according to any of claims 1 to 5, **characterized in that** the driving assembly (13) has a first driving speed and a second driving speed, the first driving speed is greater than the second driving speed, and the driving assembly (13) is adapted to drive the first half clamp body (121) and the second half clamp body (122) at the first driving speed through the connector to approach each other from an opening state to a predetermined distance, and then drive the first half clamp body (121) and the second half clamp body (122) at the second driving speed through the connector to close.

7. A sawing device, **characterized in that** the sawing device comprises:
a clamp assembly comprising two or more clamps (10) distributed independently of each other, wherein the two or more clamps (10) can be distributed around a circumference of the object (20) and be staggered with each other around the circumference, each of the clamps (10) is adapted to clamp the object (20) and reciprocate in a direction parallel to an axial direction of the object (20), and during reciprocations of the respective clamps (10), one of the clamps (10) will clamp the object (20), and other clamp (10) will be in an opening state at a meeting position so as to avoid the clamp that clamps the object (20), wherein each of the clamps (10) is a clamp (10) according to any of claims 1 to 6; and
a sawing assembly for cutting the object (20), wherein the sawing assembly comprises two or more sawing machines (30) distributed independently of each other, the sawing machine (30) is used in conjunction with the clamp (10), and the clamp (10) and the sawing machine (30) that are used in conjunction with each other can move synchronously in the direction parallel to the axial direction.

8. The sawing device according to claim 7, **characterized in that** the sawing device further comprises:
a plurality of tracks (40) that can be arranged along the direction parallel to the axial direction around a circumference of the object (20); and
a plurality of mobile assemblies that can be disposed on different tracks (40) and reciprocate along the tracks (40), wherein a number of the mobile assemblies matches with a number of the clamps (10), and the clamp (10) and the sawing machine (30) that are used in conjunction with each other are mounted on a same mobile assembly.

## Patentansprüche

1. Klammer (10), umfassend:
eine Basis (11);
einen Klammerkörper, der mit der Basis (11) verbunden ist, wobei der Klammerkörper eine erste Klammerhälfte (121) und eine zweite Klammerhälfte (122) umfasst, sowohl die erste Klammerhälfte (121) als auch die zweite Klammerhälfte (122) drehbar mit der Basis (11) verbunden ist und die erste Klammerhälfte (121) und die zweite Klammerhälfte (122) dazu ausgebildet sind, zum Einklemmen eines Gegenstandes (20) miteinander zusammenzuwirken; und
eine Antriebsanordnung (13), die mit der ersten Klammerhälfte (121) und der zweiten Klammerhälfte (122) über ein Verbindungselement verbunden ist, wobei die Antriebsanordnung (13) dazu ausgebildet ist, die erste Klammerhälfte (121) und die zweite Klammerhälfte (122) über das Verbindungselement so anzutreiben, dass sie sich drehen und aneinander annähern oder voneinander trennen,
das Verbindungselement eine erste Verbindungsstange (141) und eine zweite Verbindungsstange (142) umfasst, ein Ende der ersten Verbindungsstange (141) drehbar mit der ersten Klammerhälfte (121) verbunden ist und ein Ende der zweiten Verbindungsstange (142) drehbar mit der zweiten Klammerhälfte (122) verbunden ist;
die Antriebsanordnung (13) eine Antriebseinheit und eine Schubeinheit umfasst, das andere Ende der ersten Verbindungsstange (141) und das andere Ende der zweiten Verbindungsstange (142) beide drehbar mit der Schubeinheit verbunden sind und die Antriebseinheit dazu ausgebildet ist, die Schubeinheit zum Hin- und Herbewegen in einer Richtung senkrecht zu einer axialen Richtung des Gegenstandes (20) anzutreiben, so dass die erste Verbindungsstange (141) und die zweite Verbindungsstange (142) die erste Klammerhälfte (121) und die zweite Klammerhälfte (122) zum Drehen antreiben, damit sie sich aneinander annähern oder voneinander trennen,
die Schubeinheit eine Schubstange (132) und einen U-förmigen Rahmen (133) umfasst, der U-förmige Rahmen (133) eine Unterkante und zwei jeweils mit der Unterkante verbundene Seitenkanten umfasst, ein Ende der Schubstange (132) mit der Antriebseinheit verbunden ist und das andere Ende der Schubstange (132) mit der Unterkante des U-förmigen Rahmens (133) verbunden ist; und
das andere Ende der ersten Verbindungsstange (141) drehbar mit einer der Seitenkanten des U-förmigen Rahmens (133) verbunden ist, und das andere Ende der zweiten Verbindungsstange (142) drehbar mit der anderen Seitenkante des U-förmigen Rahmens (133) verbunden ist,
**dadurch gekennzeichnet, dass** die erste Klammerhälfte (121) und die zweite Klammerhälfte (122) symmetrisch angeordnet sind, die Schubstange (132) entlang einer Symmetrieachse der ersten Klammerhälfte (121) und der zweiten Klammerhälfte (122) angeordnet ist und vertikal mit einem Mittelpunkt der Unterseite verbunden ist, und ein Abstand zwischen den beiden Seitenkanten größer als eine Breite der ersten Klammerhälfte (121) und der zweiten Klammerhälfte (122) in einem geschlossenen Zustand ist.

2. Klammer (10) nach Anspruch 1, **dadurch gekennzeichnet, dass** die Klammer (10) ferner eine Gleitschiene (15) umfasst, die an der Basis (11) entlang einer Richtung parallel zur Symmetrieachse angeordnet ist, und ein Gleiter (1331) an dem U-förmigen Rahmen (133) angeordnet ist, und der Gleiter (1331) an der Gleitschiene (15) angeordnet ist und entlang der Gleitschiene (15) gleiten kann.

3. Klammer (10) nach einem der Ansprüche 1 bis 2, **dadurch gekennzeichnet, dass** die erste Klammerhälfte (121) und die zweite Klammerhälfte (122) beide über einen Bolzen (16) drehbar mit der Basis (11) verbunden sind; oder
die erste Klammerhälfte (121) über einen ersten Bolzen (17) drehbar mit der Basis (11) verbunden ist, die zweite Klammerhälfte (122) über einen zweiten Bolzen (18) drehbar mit der Basis (11) verbunden ist, und der erste Bolzen (17) und der zweite Bolzen (18) symmetrisch zur Symmetrieachse der ersten Klammerhälfte (121) und der zweiten Klammerhälfte (122) angeordnet sind.

4. Klammer (10) nach einem der Ansprüche 1 bis 3, **dadurch gekennzeichnet, dass** die erste Klammerhälfte (121) und die zweite Klammerhälfte (122) entsprechend einen Klemmarm (1211) und ein Klemmteil (1222) mit einer Klemmöffnung aufweisen, das Klemmteil (1222) und der Klemmarm (1211) lösbar miteinander verbunden sind und das Klemmteil (1222) zum Einklemmen des Gegenstandes (20) ausgebildet ist.

5. Klammer (10) nach Anspruch 4, **dadurch gekennzeichnet, dass** der Klemmarm (1211) einen ersten Verbindungsabschnitt und einen zweiten Verbindungsabschnitt aufweist, und der erste Verbindungsabschnitt und der zweite Verbindungsabschnitt in einem vorbestimmten Winkel miteinander verbunden sind, der erste Verbindungsabschnitt drehbar mit der Basis (11) verbunden ist, und das Klemmteil (1222) auf dem zweiten Verbindungsabschnitt angeordnet ist.

6. Klammer (10) nach einem der Ansprüche 1 bis 5, **dadurch gekennzeichnet, dass** die Antriebsanordnung (13) eine erste Antriebsgeschwindigkeit und eine zweite Antriebsgeschwindigkeit aufweist, die erste Antriebsgeschwindigkeit größer als die zweite Antriebsgeschwindigkeit ist, und die Antriebsanordnung (13) dazu ausgebildet ist, die erste Klammerhälfte (121) und die zweite Klammerhälfte (122) mit der ersten Antriebsgeschwindigkeit durch das Verbindungselement anzutreiben, um sie sich aus einem geöffneten Zustand bis zu einem vorbestimmten Abstand aneinander anzunähern, und dann die erste Klammerhälfte (121) und die zweite Klammerhälfte (122) mit der zweiten Antriebsgeschwindigkeit durch das Verbindungselement zum Schließen anzutreiben.

7. Sägevorrichtung, **dadurch gekennzeichnet, dass** die Sägevorrichtung Folgendes umfasst:
eine Klemmanordnung, die zwei oder mehr unabhängig voneinander verteilte Klammern (10) umfasst, wobei die zwei oder mehr Klammern (10) um einen Umfang des Gegenstandes (20) herum verteilt und entlang den Umfang zueinander versetzt sein können, jede der Klammern (10) dazu ausgebildet ist, den Gegenstand (20) einzuklemmen und sich in einer Richtung parallel zu einer axialen Richtung des Gegenstands (20) hin und her zu bewegen, und während der Hin- und Herbewegungen der jeweiligen Klammern (10) eine der Klammern (10) den Gegenstand (20) einklemmt, und die andere Klammer (10) sich in einem geöffneten Zustand in einer versetzten Position befindet, um die den Gegenstand (20) einklemmende Klammer zu umgehen, wobei jede der Klammern (10) eine Klammer (10) nach einem der Ansprüche 1 bis 6 ist; und
eine Sägeanordnung zum Schneiden des Gegenstandes (20), wobei die Sägeanordnung zwei oder mehr unabhängig voneinander verteilte Sägemaschinen (30) umfasst, die Sägemaschine (30) in Verbindung mit der Klammer (10) verwendet wird, und die Klammer (10) und die Sägemaschine (30), die in Verbindung miteinander verwendet werden, sich synchron in der Richtung parallel zur axialen Richtung bewegen können.

8. Sägevorrichtung nach Anspruch 7, **dadurch gekennzeichnet, dass** die Sägevorrichtung ferner Folgendes umfasst:
eine Vielzahl von Bahnen (40), die entlang der Richtung parallel zur axialen Richtung um einen Umfang des Gegenstandes (20) angeordnet werden können; und
eine Vielzahl von beweglichen Bauteilen, die auf verschiedenen Bahnen (40) angeordnet werden können und sich entlang der Bahnen (40) hin- und herbewegen können, wobei eine Anzahl die beweglichen Bauteile mit einer Anzahl der Klammern (10) übereinstimmt und die Klammer (10) und die Sägemaschine (30), die in Verbindung miteinander verwendet werden, auf dasselbe bewegliche Bauteil montiert sind.

## Revendications

1. Pince (10), comprenant :
une base (11) ;
un corps de pince relié à la base (11), dans lequel le corps de pince comprend une première moitié de corps de pince (121) et une deuxième moitié de corps de pince (122), chacune de la première moitié de corps de pince (121) et de la deuxième moitié de corps de pince (122) est reliée de manière rotative à la base (11), et la première moitié de corps de pince (121) et la deuxième moitié de corps de pince (122) sont adaptées pour coopérer l'un avec l'autre pour pincer un objet (20) ; et
un ensemble d'entraînement (13) relié à la première moitié de corps de pince (121) et à la deuxième moitié de corps de pince (122) par l'intermédiaire d'un connecteur, dans lequel l'ensemble d'entraînement (13) est adapté pour entraîner la première moitié de corps de pince (121) et la deuxième moitié de corps de pince (122) par l'intermédiaire du connecteur à tourner et se rapprocher ou se séparer l'un de l'autre,
le connecteur comprend une première bielle (141) et une deuxième bielle (142), une extrémité de la première bielle (141) est reliée de manière rotative à la première moitié de corps de pince (121) et une extrémité de la deuxième bielle (142) est reliée de manière rotative à la deuxième moitié de corps de pince (122) ;
l'ensemble d'entraînement (13) comprend une unité d'entraînement et une unité de poussée, l'autre extrémité de la première bielle (141) et l'autre extrémité de la deuxième bielle (142) sont toutes deux reliées de manière rotative à l'unité de poussée, et l'unité d'entraînement est adaptée pour entraîner l'unité de poussée à effectuer un mouvement alternatif dans un sens perpendiculaire à un sens axial de l'objet (20), de sorte que la première bielle (141) et la deuxième bielle (142) entraînent la première moitié de corps de pince (121) et la deuxième moitié de corps de pince (122) à tourner pour se rapprocher ou se séparer l'un de l'autre,
l'unité de poussée comprend une tige de poussée (132) et un cadre en forme U (133). le cadre en forme U (133) comprend un bord inférieur et deux bords latéraux reliés respectivement au bord inférieur, une extrémité de la tige de poussée (132) est reliée à l'unité d'entraînement et l'autre extrémité de la tige de poussée (132) est reliée au bord inférieur du cadre en forme U (133) ; et
l'autre extrémité de la première bielle (141) est reliée de manière rotative à l'un des bords latéraux du cadre en forme U (133), et l'autre extrémité de la deuxième bielle (142) est reliée de manière rotative à l'autre bord latéral du cadre en forme U (133),
**caractérisée en ce que**, la première moitié de corps de pince (121) et la deuxième moitié de corps de pince (122) sont disposés de manière symétrique, la tige de poussée (132) est disposée le long d'un axe de symétrie de la première moitié de corps de pince (121) et de la deuxième moitié de corps de pince (122) et est reliée perpendiculairement au centre du côté inférieur, et une distance entre les deux bords latéraux est supérieure à une largeur du la première moitié de corps de pince (121) et de la deuxième moitié de corps de pince (122) à l'état fermé.

2. Pince (10) selon la revendication 1, **caractérisée en ce que** la pince (10) comprend en outre un rail de coulissement (15) disposé sur la base (11) selon un sens parallèle à l'axe de symétrie, et un curseur (1331) est disposé sur le cadre en forme U (133), et le curseur (1331) est disposé sur le rail de coulissement (15) et peut coulisser le long du rail de coulissement (15).

3. Pince (10) selon l'une quelconque des revendications 1 à 2, **caractérisée en ce que** la première moitié de corps de pince (121) et la deuxième moitié de corps de pince (122) sont tous deux reliés de manière rotative à la base (11) par l'intermédiaire d'une broche (16) ; ou
la première moitié de corps de pince (121) est relié de manière rotative à la base (11) par l'intermédiaire d'une première broche (17), la deuxième moitié de corps de pince (122) est reliée de manière rotative à la base (11) par l'intermédiaire d'une deuxième broche (18), et la première broche (17) et la deuxième broche (18) sont disposées de manière symétrique par rapport à l'axe de symétrie de la première moitié de corps de pince (121) et de la deuxième moitié de corps de pince (122).

4. Pince (10) selon l'une quelconque des revendications 1 à 3, **caractérisée en ce que** chacune de la première moitié de corps de pince (121) et de la deuxième moitié de corps de pince (122) comprend un bras de pincement (1211) et un élément de pincement (1222) avec une ouverture de pincement, l'élément de pincement (1222) et le bras de pincement (1211) sont reliés de manière amovible, et l'élément de pincement (1222) est adaptée pour pincer l'objet (20).

5. Pince (10) selon la revendication 4, **caractérisée en ce que**, le bras de pincement (1211) comprend une première section de liaison et une deuxième section de liaison, la première section de liaison et la deuxième section de liaison sont reliées à un angle prédéterminé, la première section de liaison est reliée de manière rotative à la base (11) et l'élément de pincement (1222) est disposée sur la deuxième section de liaison.

6. Pince (10) selon l'une quelconque des revendications 1 à 5, **caractérisée en ce que**, l'ensemble d'entraînement (13) a une première vitesse d'entraînement et une deuxième vitesse d'entraînement, la première vitesse d'entraînement est supérieure à la deuxième vitesse d'entraînement, l'ensemble d'entraînement (13) est adapté pour entraîner la première moitié de corps de pince (121) et la deuxième moitié de corps de pince (122) à la première vitesse d'entraînement par l'intermédiaire du connecteur à se rapprocher l'un de l'autre à partir d'un l'état d'ouverture à une distance prédéterminée, puis entraîner la première moitié de corps de pince (121) et la deuxième moitié de corps de pince (122) à la deuxième vitesse d'entraînement par l'intermédiaire du connecteur à se fermer.

7. Dispositif de sciage, **caractérisé en ce que** le dispositif de sciage comprend :
un ensemble de pinces comprenant deux ou plusieurs pinces (10) réparties indépendamment l'une de l'autre, dans lequel les deux ou plusieurs pinces (10) peuvent être réparties autour d'une circonférence de l'objet (20) et être décalées l'une par rapport à l'autre autour de la circonférence, chacune des pinces (10) est adaptée pour pincer l'objet (20) et faire un mouvement alternatif dans un sens parallèle à un sens axial de l'objet (20), et pendant le mouvement alternatif des pinces respectives (10), l'une des pinces (10) pincera l'objet (20), et l'autre pince (10) sera dans un état d'ouverture à une position de rencontre pour éviter la pince qui serre l'objet (20), dans lequel chacune des pinces (10) est une pince (10) selon l'une quelconque des revendications 1 à 6 ; et
un ensemble de sciage pour couper l'objet (20), dans lequel l'ensemble de sciage comprend deux ou plusieurs machines à scier (30) réparties indépendamment l'une de l'autre, la machine à scier (30) est utilisée en combinaison avec la pince (10), et la pince (10) et la machine à scier (30) qui sont utilisées en combinaison l'une avec l'autre peuvent se déplacer de manière synchrone dans le sens parallèle au sens axial.

8. Dispositif de sciage selon la revendication 7, **caractérisé en ce que** le dispositif de sciage comprend en outre :
une pluralité de pistes (40) qui peuvent être disposées selon le sens parallèle au sens axial autour d'une circonférence de l'objet (20) ; et
une pluralité d'ensembles mobiles qui peuvent être disposés sur différentes pistes (40) et faire un mouvement alternatif le long des pistes (40), dans lequel un nombre d'ensembles mobiles correspondent à un nombre de pinces (10), et la pince (10) et la machine à scier (30) qui sont utilisées en combinaison les unes avec les autres sont montées sur un même ensemble mobile.
